# EUROPÄISCHE PATENTSCHRIFT

(11) **EP 3 248 258 B1**
(45) Veröffentlichungstag und Bekanntmachung des Hinweises auf die Patenterteilung: **10.07.2024**
(21) Anmeldenummer: 15813086.4
(22) Anmeldetag: 22.12.2015
(51) Int. Cl.: H02H 9/04, H02H 3/06, H02H 3/22, H02H 7/12

(54) **SCHALTUNGSANORDNUNG MIT BAUELEMENTEN DER LEISTUNGSELEKTRONIK**
CIRCUIT ARRANGEMENT COMPRISING POWER ELECTRONICS COMPONENTS
AGENCEMENT DE CIRCUIT COMPORTANT DES COMPOSANTS ÉLECTRONIQUES DE PUISSANCE

(30) Priorität: 19.01.2015 DE 202015000389 U; 19.03.2015 DE 202015002155 U
(43) Veröffentlichungstag der Anmeldung: 29.11.2017
(73) Patentinhaber: DEHN SE, 92318 Neumarkt i.d. OPf. (DE)
(72) Erfinder: SCHORK, Franz, 90461 Nürnberg (DE); BÖHM, Thomas, 92366 Hohenfels (DE); DONAUER, Dominik, 92331 Parsberg (DE); BROCKE, Ralph, 98693 Ilmenau / Oberpörlitz (DE)
(74) Vertreter: Prinz & Partner mbB
(86) Internationale Anmeldenummer: PCT/EP2015/080964
(87) Internationale Veröffentlichungsnummer: WO 2016/116243

(56) Entgegenhaltungen:
- US-A- 4 438 473
- US-A1- 2013 021 702
- US-B1- 7 254 000

## Beschreibung

Die Erfindung betrifft die Verwendung einer Schaltungsanordnung mit Bauelementen der Leistungselektronik zum Ableiten eines Stoßstroms.

Es ist bekannt, Leistungshalbleiter als Schaltelement in DC-DC-Konvertern, Wechselrichtern, Netzteilen oder dergleichen einzusetzen. Üblicherweise besitzen derartige Netzteile einen integrierten Feinschutz gegen Überspannungen. Als Feinschutzbauelement kommen insbesondere Varistoren zum Einsatz.

So zeigt die EP 0 757 420 B1 ein elektronisches Vorschaltgerät mit Einschaltstrombegrenzung und/oder Überspannungsschutz. Zum Schutz von aus dem Netz stammenden Überspannungen ist eine selbstrücksetzende Schutzschaltung ausgebildet, die auch kurzzeitige, impulsartige im Wechselstromnetz auftretende Überspannungen erkennt und ableitet. Diesbezüglich ist ein Varistor vorgesehen, der im Überspannungsfall kurzzeitig leitend wird und den entsprechenden Stoßstromimpuls ableitet. Darüber hinaus ist ein MOSFET vorhanden, der über eine Diode zum Zweck einer Längsentkopplung abschaltbar ist. Es ist also zum wirkungsvollen Schutz nach wie vor die Anordnung eines Varistors im Querzweig notwendig.

Bei der Schaltungsanordnung zur Begrenzung des Einschaltstroms und der Überspannung eines elektronischen Vorschaltgeräts nach EP 0 637 118 B1 soll der Schutz gegen Überspannungen mit einem minimalen Aufwand an Bauelementen gewährleistet werden.

Diesbezüglich ist ein Schalter mit einem n-Kanal Feldeffekttransistor realisiert. Wenn über den Hauptanschlüssen der vorbekannten Schaltungsanordnung eine Spannung anliegt, die größer als die Sperrspannung einer Zenerdiode ist, wird ein nachgeordneter Transistor leitend und schließt damit die Gate-Source-Spannung des Feldeffekttransistors kurz. Hierdurch bleibt der Schalter geöffnet. Wenn die Spannung über den Hauptanschlüssen unter die Sperrspannung der Zenerdiode fällt, verliert der Transistor seine leitende Funktion, die Gate-Source-Spannung des Feldeffekttransistors kann ansteigen und es wird der erwähnte Schalter kurzgeschlossen. Der mit S1 bezeichnete Schalter nach EP 0 637 118 B1 erfüllt damit zwei Aufgaben. Zum einen ist der Einschaltstrom des dortigen Hochsetzstellers begrenzt. Beim Anlegen einer Spannung an den Hauptanschlüssen ist der Schalter S1 zunächst geschlossen. Ein Öffnen des Schalters erfolgt relativ langsam über einen Widerstand R2. Im Überspannungsfall wird, wie bereits geschildert, der Transistor geöffnet, was ein Schließen des Schalters zur Folge hat, so dass eine Längsentkopplung der Last bewirkt wird. Ein Schutz vor Überspannungen der Impulsform 8/20 µs bzw. 10/350 µs ist nicht möglich, da sich das Schutzelement in Form des Schalters S1 nur im Längspfad befindet. Darüber hinaus ist die Sperrfähigkeit einer solchen Anordnung im Längspfad begrenzt.

Zum Stand der Technik sei noch auf die DE 10 2004 025 420 B4 aufmerksam gemacht, welche ein Schaltungselement zum Sichern einer Lastschaltung und Chip mit einem derartigen Schaltungselement offenbart. Bei einem Schutzereignis, z.B. einer Überspannung oder einem Überstrom schaltet ein Thyristor / IGBT vor der Last ein, so dass ein hoher Strom an der Last vorbeifließen kann und diese nicht nachhaltig beeinflusst. Dieser hohe Stromfluss lässt eine Engstelle in einer im Layout vorgesehenen Leiterbahn durchbrennen, so dass ein Überstromschutz gegeben ist. Problematisch ist, dass nach dem Durchbrennen der Leiterbahn die Last dauerhaft von der Versorgung getrennt bleibt. Der eingesetzte IGBT dient letztlich nur dazu, ein Sicherungselement auszulösen. Schutz vor transienten Überspannungen der Impulsform 8/20 µs bzw. 10/350 µs ist nicht gegeben.

Die US 2013/0021702 A1 zeigt eine Schaltungsanordnung zum Kontrollieren eines Einschaltstroms, wobei die Schaltungsanordnung eine Überwachungsschaltung zum Erkennen von Überspannungen umfassen kann. Die Überwachungsschaltung nutzt mehrere Widerstände, eine Zenerdiode sowie einen Transistor, um bei Erreichen eines Spannungsschwellwerts ein Abschalten zu bewirken.

Aus der US 7 254 000 B1 ist eine Schaltanordnung zum Schutz vor Überspannungen in einem Tiefsetzsteller bekannt, welcher zwischen zwei Schaltelementen schaltet, beispielsweise zwischen zwei MOSFETs, um im Überspannungsfall eine angeschlossene Last zu schützen.

Die US 4 438 473 A offenbart eine Schaltungsanordnung mit einem Schalter zum Blockieren des Stromflusses, wobei der Schalter mittels einer Kontrollschaltung entweder ein- oder ausgeschaltet ist und die Kontrollschaltung mit einem Spannungssensor verbunden ist.

Aus dem Vorgenannten ist es daher Aufgabe der Erfindung, eine weiterentwickelte Schaltungsanordnung mit Bauelementen der Leistungselektronik anzugeben, welche auf zusätzliche Mittel zum Feinschutz wie z.B. Schmelzelemente, Varistoren oder dergleichen verzichtet und die es ermöglicht, einen wirksamen Schutz gegen transiente Überspannungen der Impulsform 8/20 µs bzw. 10/350 µs zu gewährleisten.

Die Lösung der Aufgabe der Erfindung erfolgt mit der Merkmalskombination nach Anspruch 1, wobei die Unteransprüche mindestens zweckmäßige Ausgestaltungen und Weiterbildungen darstellen.

Es wird demnach von einer Schaltungsanordnung mit Bauelementen der Leistungselektronik, umfassend einen Treiber, ausgegangen, wobei der Treiber mindestens einen Leistungshalbleiter im Querzweig eines Netzteils, eines DC-DC-Konverters, eines Wechselrichters, eines Hochsetz- oder Tiefsetzstellers oder dergleichen Stromversorgungseinrichtung ansteuert, um die Strom- bzw. Spannungsversorgung einer Last zu sichern.

Erfindungsgemäß ist ein Sensor zur Erkennung von transienten Überspannungen mit dem Treiber in Verbindung stehend, wobei mit dem Erkennen eines Überspannungsereignisses der Treiber den mindestens einen Leistungshalbleiter im Querzweig zum Durchschalten veranlasst derart, dass das jeweilige Überspannungsereignis keine auf die eigentliche Funktion der Schaltungsanordnung nachteiligen Auswirkungen zur Folge hat.

Der Grundgedanke der Erfindung liegt demnach darin, einen ohnehin im Querzweig eines klassischen Netzteils vorhandenen Leistungshalbleiter aktiv zum Zweck des Überspannungsschutzes zu nutzen, wodurch zusätzliche Bauelemente eingespart werden können. Der eingesetzte bzw. modifizierte Treiber muss in Verbindung mit der erwähnten Sensorik in der Lage sein, Überspannungsereignisse sicher zu erkennen und eine Reaktion auf eine Überspannung im Nanosekundenbereich zu ermöglichen.

Wenn ein Überspannungsereignis vorliegt, besteht erfindungsgemäß die Möglichkeit, die Versorgungsspannung des Treibers und/oder der Sensorik aus der Impulsenergie des Überspannungsereignisses abzuleiten. Damit ist ein Überspannungsschutz auch während eines Netzausfalls gewährleistet.

Weiterhin ist dafür Sorge getragen, dass eine Unterscheidung von transienten Überspannungen und temporären Überspannungen möglich ist.

Der Leistungshalbleiter wird bei einer Überspannung mit erhöhter Gatespannung eingeschaltet. Nach dem Einschaltvorgang wird über eine Logik sichergestellt, dass der Leistungshalbleiter nicht sofort wieder einschaltet. Diesbezüglich wird eine zeitliche Sperre, z.B. für einen Zeitraum von einer Minute, realisiert.

Der Leistungshalbleiter wird also gemäß der Erfindungslehre als schaltendes Bauelement einerseits und als Überspannungsschutzelement andererseits doppelt funktional genutzt. Damit ist der ohnehin vorhandene Leistungshalbleiter durch seine weitere Funktion in der Lage, den erforderlichen Feingeräteschutz zu übernehmen.

Die Erfindung soll nachstehend anhand von Ausführungsbeispielen sowie von Figuren näher erläutert werden.

Hierbei zeigen:
Fig. 1 ein Prinzipschaltbild eines Hochsetzstellers mit der Doppelnutzung des dort im Querzweig befindlichen Leistungshalbleiters und
Fig. 2 ein Prinzipschaltbild eines Tiefsetzstellers ebenfalls mit einem im Querzweig befindlichen Leistungshalbleiter (NMOS).

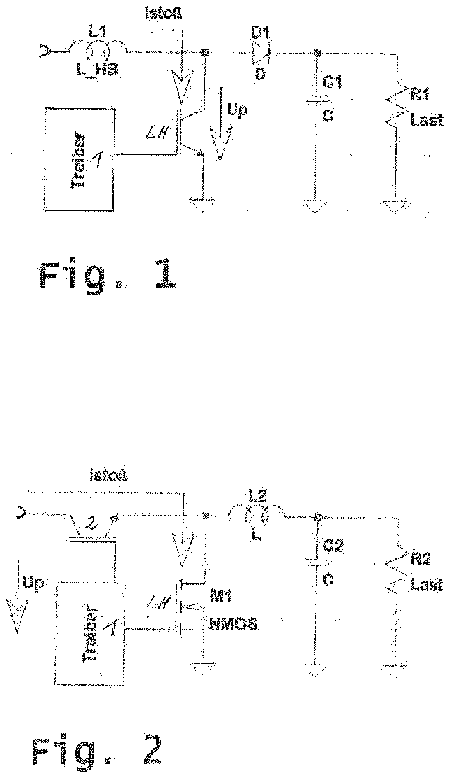

Bei den in den Fig. 1 und 2 gezeigten Beispielen eines Hochsetzstellers bzw. eines Tiefsetzstellers ist eine Treiberschaltung 1 vorgesehen, die jeweils einen Leistungshalbleiter LH schaltet, um die gewünschten Funktionen zu realisieren.

In der Darstellung nach Fig. 1 wird ein Leistungstransistor LH über dessen Basis geschaltet. Im Beispiel nach Fig. 2 wird ein NMOS-Feldeffekttransistor am Gate mit einer entsprechenden Steuerspannung beaufschlagt.

Der Hochsetzsteller nach Fig. 1 versorgt die Last R1, wobei der Tiefsetzsteller nach Fig. 2 die Last R2 treibt. Die Bauelemente L1, D1, C1, L2, C2 sowie der im Längszweig nach Fig. 2 vorgesehene weitere Transistor 2 sind an sich bekannte Schaltungsbestandteile für einen Hochsetz- bzw. Tiefsetzsteller.

Wenn ein Stoßstromereignis in Form einer transienten Überspannung (Istoß) erkannt wurde, wofür eine nicht dargestellte Sensorik einsetzbar ist, wird der Treiber 1 veranlasst, den Leistungshalbleiter LH durchzuschalten. Da sich der Leistungshalbleiter LH im Querzweig der jeweiligen Anordnung befindet, kann der Stoßstrom sicher abgeleitet werden, ohne dass funktionswesentliche Teile der betreffenden Schaltungsanordnung nachhaltig geschädigt oder zerstört werden.

Mit den vorgestellten prinzipiellen schaltungstechnischen Möglichkeiten ist gewährleistet, dass ein Schutz vor Überspannungen der Impulsform 8/20 µs bzw. 10/350 µs erreicht wird.

Nach Ablauf einer vorgegebenen Zeit nach dem Überspannungsereignis nimmt der Treiber seine primär bestimmungsgemäße Funktion wieder auf und die betreffende Schaltungsanordnung sichert die Versorgung der betreffenden Last R1 bzw. R2.

## Patentansprüche

1. Verwendung einer Schaltungsanordnung mit Bauelementen der Leistungselektronik zum Ableiten eines Stoßstroms, wobei der Stoßstrom ein Stoßstrom ist, der bei transienten Überspannungen der Impulsform 8/20 µs oder 10/350 µs auftritt,
wobei die Schaltungsanordnung ein Netzteil, ein DC-DC-Konverter, ein Wechselrichter, ein Hochsetz- oder Tiefsetzsteller oder eine derartige Stromversorgungseinrichtung ist,
wobei die Schaltungsanordnung einen Treiber (1) und einen Leistungshalbleiter (LH) aufweist,
wobei der Treiber (1) den Leistungshalbleiter (LH) ansteuert, um die Strom- bzw. Spannungsversorgung einer an die Schaltungsanordnung angeschlossenen Last (R1; R2) zu sichern, und
wobei der Leistungshalbleiter (LH) in einem Querzweig der Schaltungsanordnung angeordnet ist,
wobei die Schaltungsanordnung einen Sensor zur Erkennung von transienten Überspannungen (Istoß) aufweist, wobei der Sensor mit dem Treiber (1) in Verbindung steht,
wobei mit dem Erkennen eines Überspannungsereignisses der Treiber (1) den Leistungshalbleiter (LH) im Querzweig zum Durchschalten veranlasst derart, dass der Stoßstrom sicher abgeleitet wird und durch das jeweilige Überspannungsereignis die Teile der Schaltungsanordnung nicht geschädigt oder zerstört werden.

2. Verwendung nach Anspruch 1, **dadurch gekennzeichnet, dass** ein Logikbaustein der Schaltungsanordnung den Leistungshalbleiter (LH) im Fall eines vorangegangenen Überspannungsereignisses gegen sofortiges Wiedereinschalten zeitweilig sperrt.

3. Verwendung nach Anspruch 1 oder 2, **dadurch gekennzeichnet, dass** der Treiber auf Reaktionszeiten bei Überspannungsereignissen im Nanosekundenbereich eingestellt oder eingerichtet ist.

4. Verwendung nach einem der vorangegangenen Ansprüche, **gekennzeichnet durch** deren Einsatz als Feingeräteschutz mit einer Doppelfunktion des Leistungshalbleiters (LH) einerseits als schaltendes Bauelement und andererseits als Kurzschließer im Fall von Überspannungsereignissen.

5. Verwendung nach einem der vorangegangenen Ansprüche, **dadurch gekennzeichnet, dass** im Fall eines Überspannungsereignisses die Stromversorgung des Sensors und/oder Treibers (1) aus der jeweiligen Impulsenergie des Überspannungsereignisses abgeleitet ist.

## Claims

1. Use of a circuit arrangement comprising power electronics components for discharging a surge current, the surge current being a surge current which occurs in the case of transient overvoltages of the 8/20 µs or 10/350 µs pulse shape,
the circuit arrangement being a power supply unit, a DC-DC converter, an inverter, a step-up or step-down converter or a power supply device of this type,
the circuit arrangement including a driver (1) and a power semiconductor (LH),
the driver (1) driving the power semiconductor (LH) to ensure the current or voltage supply to a load (R1; R2) connected to the circuit arrangement, and
the power semiconductor (LH) being arranged in a shunt arm of the circuit arrangement,
the circuit arrangement including a sensor for detecting transient overvoltages (Isurge), the sensor being in communication with the driver (1),
wherein
when an overvoltage event is detected, the driver (1) causes the power semiconductor (LH) in the shunt arm to be turned on such that the surge current is safely discharged and the parts of the circuit arrangement are not damaged or destroyed by the respective overvoltage event.

2. Use according to claim 1, **characterized in that** a logic module of the circuit arrangement temporarily blocks the power semiconductor (LH) against immediate reconnection in the case of a preceding overvoltage event.

3. Use according to claim 1 or 2, **characterized in that** the driver is adjusted or adapted to response times for overvoltage events in the nanosecond range.

4. Use according to any of the preceding claims, **characterized by** the employment of the circuit arrangement as a precision apparatus protection with a dual function of the power semiconductor (LH) as a switching component, on the one hand, and as a short-circuiting device in the case of overvoltage events, on the other hand.

5. Use according to any of the preceding claims, **characterized in that**, in the case of an overvoltage event, the power supply of the sensor and/or the driver (1) is derived from the respective pulse energy of the overvoltage event.

## Revendications

1. Utilisation d'un agencement de circuits comprenant des composants de l'électronique de puissance pour la dérivation d'un courant de choc, le courant de choc étant un courant de choc survenant dans le cas de surtensions transitoires de forme d'impulsion 8/20 µs ou 10/350 ps,
l'agencement de circuits étant un bloc d'alimentation, un convertisseur DC-DC, un onduleur, un convertisseur élévateur ou abaisseur, ou un moyen d'alimentation en courant de ce type,
l'agencement de circuits présentant un pilote (1) et un semi-conducteur de puissance (LH),
le pilote (1) pilotant le semi-conducteur de puissance (LH) pour assurer l'alimentation en courant ou en tension d'une charge (R1 ; R2) raccordée à l'agencement de circuits, et
le semi-conducteur de puissance (LH) étant agencé dans une branche transversale de l'agencement de circuits,
l'agencement de circuit présentant un capteur de détection de surtensions transitoires (Ichoc), le capteur étant en communication avec le pilote (1),
le pilote (1), lors de la détection d'un évènement de surtension, amenant le semi-conducteur de puissance (LH) dans la branche transversale à réaliser une connexion de sorte que le courant de choc est dérivé de manière sûre et que les pièces de l'agencement de circuits ne sont pas endommagées ou détruites par l'évènement de surtension respectif.

2. Utilisation selon la revendication 1, **caractérisée en ce qu'**un élément logique de l'agencement de circuits bloque temporairement le semi-conducteur de puissance (LH) contre une remise en marche immédiate dans le cas d'un évènement de surtension précédent.

3. Utilisation selon la revendication 1 ou 2, **caractérisée en ce que** le pilote est adapté ou aménagé pour des temps de réaction de l'ordre de nanosecondes dans le cas d'événements de surtension.

4. Utilisation selon l'une des revendications précédentes, **caractérisée par** l'utilisation de l'agencement de circuits en tant que protection d'appareil de précision avec une double fonction du semi-conducteur de puissance (LH), d'une part en tant que composant de commutation, et d'autre part en tant que courtcircuiteur dans le cas d'événements de surtension.

5. Utilisation selon l'une des revendications précédentes, **caractérisée en ce que** dans le cas d'un évènement de surtension, l'alimentation en courant du capteur et/ou du pilote (1) est dérivée de l'énergie d'impulsion respective de l'évènement de surtension.
